# EUROPÄISCHE PATENTANMELDUNG

(11) **EP 1 959 636 A1**
(43) Veröffentlichungstag der Anmeldung: **20.08.2008**
(21) Anmeldenummer: 07102535.7
(22) Anmeldetag: 16.02.2007
(51) Int. Cl.: H04L 29/08

(54) **Verfahren zum Austausch von Daten**

(71) Anmelder: Siemens Aktiengesellschaft Österreich, 1210 Wien (AT)
(72) Erfinder: Andrae, Michael, 1160, Wien (AT); HellL, Stefan, 2345, Brunn am Gebirge (AT); Moshammer, Gernot, 1100, Wien (AT); Musil, Gottfried, 1070, Wien (AT); Schupp, Markus, 1190, Wien (AT)

(57) **Zusammenfassung**

Verfahren zum Austausch von Dateiobjekten (O_{1...n}) zwischen mindestens zwei Endnutzern (U1, U2) innerhalb eines Kommunikationsnetzwerkes. Um eine transparente und faire Online-Tauschplattform zu realisieren, ist eine zentrale Verwaltungseinheit (VE) vorgesehen, an welche die Dateiobjekte (O_{1...n}) von den Endnutzern (U1, U2) übermittelt und dort mit einer Identifikationskennung (IK_{1...n}) versehen, auf einem Speichermedium (M) archiviert und gegen unautorisierten Zugriff geschützt werden. In der Folge wird für jeden Endnutzer (U1, U2) eine Tauschliste (TL_{U1}, TL_{U2}) generiert, wobei vom ersten Endnutzer (U1) eine Auswahl (A) jener Dateiobjekte (O_{1...n}) aus der Tauschliste (TL_{U2}) des zweiten Endnutzers (U2) vorgenommen werden kann, welche im Austausch gegen eine Auswahl (A') an Dateiobjekten (O_{1...n}) aus seiner eigenen Tauschliste (TL_{U1}) angefragt wird. Aus den beiden Auswahlen (A, A') wird ein Anbotsdatensatz (Z) erstellt, wobei im Falle einer Bestätigung des Anbotsdatensatzes (Z) durch den zweiten Endnutzer (U2) eine Übermittlung der im Anbotsdatensatz (Z) angeführten Dateiobjekte (O_{1...n}) an die Endnutzer (U1, U2) erfolgt.

## Beschreibung

Die Erfindung bezieht sich auf ein Verfahren zum Austausch von Daten zwischen mindestens zwei Endnutzern innerhalb eines Kommunikationsnetzwerkes, wobei die Daten von den Endnutzern in Form von Dateiobjekten bereitgestellt werden, gemäß dem Oberbegriff des Anspruchs 1.

Die zunehmende Nutzung und Verbesserung der Online-Infrastruktur hat in den letzten Jahren zu einer stark erhöhten Nachfrage nach elektronischen Daten im Internet geführt. Endnutzer, welche z.B. mit einem über eine entsprechende Schnittstelle verfügenden PC oder einem Handheld-Gerät ausgestattet sind, nutzen diese Möglichkeit, um von Anbietern aus dem Internet multimediale Inhalte downzuloaden.

Entsprechend diesen Inhalten hat sich eine Vielzahl von neuen Dateitypen herausgebildet, die für die jeweiligen Inhalte eine optimale Darstellung erlauben. Der Informationsinhalt bzw. Typ des jeweiligen Dateiobjektes lässt sich etwa als Audiodatei, Bilddatei, Filmdatei, Textdatei, ausführbare Datei, Datendatei, oder Mischungen davon klassifizieren. Dieser Dateityp wird in der Regel nach einer Dateiendung identifiziert, also lassen sich unter anderem folgende Dateitypen exemplarisch darstellen:
Textdateien : TXT, DOC, PDF, HTML, ASCII, RTF, PHP, SQL etc.
Audiodateien : WAV, AIF, SNG, MP3, AAC, MPEG, OGG etc.
Bilddateien : BMP, TIF, JPEG, GIF, PSF, EPS etc.
Filmdateien : AVI, MOV, MPEG etc.
Datendateien : DB, DBF, ZIP, RAR, TAR, GZ, TGZ, FP5 etc.
Ausführbahre Dateien : EXE, BIN, SH, SO, JAVA, ASP, PHP, PL etc.

Derartige Dateiobjekte lassen sich durch den Endnutzer unter Verwendung eines geeigneten Endgerätes bzw. eines Terminals anzeigen und/oder abspielen.

Neben der bekannten Möglichkeit, Dateiobjekte über das Internet zu einem vom Anbieter festgelegten Preis, z.B. mittels Abbuchung von einer Kreditkarte zu kaufen, entwickelt sich unter den Endnutzern auch ein zunehmendes Interesse daran, derartige Dateiobjekte mittels eines Tauschgeschäftes zu erwerben.

Zu diesem Zweck existieren bereits virtuelle "Tauschbörsen", in welchen Endnutzer diverse Dateiobjekte öffentlich oder in einem geschlossenen Rahmen anbieten, zumeist kombiniert mit einer Suchanfrage nach einem oder mehreren ihrerseits gewünschten Dateiobjekten. Um sich über einen Austausch von Dateiobjekten einig zu werden, treten die Endnutzer zumeist in eine Korrespondenz per E-Mail, SMS, Website-Fenster oder auch in eine sonstige Kommunikation wie etwa per Telefon oder Web-Cam.

Wird also einem anbietenden Endnutzer von einem weiteren Endnutzer ein Tauschgeschäft unterbreitet, zu welchem jener sein Einverständnis abgibt, so stellt sich jedoch oft die kritische Frage nach einem korrekten Ablauf der nun erforderlichen Datentransaktion. In dieser Hinsicht trägt derjenige Endnutzer das primäre Risiko, von seinem Tauschpartner betrogen zu werden, welcher als erster seine Dateiobjekte überträgt bzw. zum Download freigibt. Denn schließlich ist es auch möglich, dass das/die im Gegenzug erhaltene(n) Dateiobjekt(e) fehlerhaft bzw. nicht ausführbar ist/sind oder dass der andere Endnutzer bloß vorgab, solche Dateiobjekte zu besitzen, ohne dass dies jedoch real der Fall war.

Es existieren des Weiteren Online-Tauschsysteme, welche ein Tauschgeschäft unter Zuhilfenahme einer definierten Verrechnungsgröße ermöglichen. Hierbei erfolgt eine Bewertung der zum Tausch angebotenen Dateiobjekte in einer Geldeinheit oder auch in Form einer individuell gewählten Werteinheit wie etwa durch "Bonuspunkte" oder "E-Taler". Nachteilig erweist sich hierbei auch die Tatsache, dass eine derartige Bewertung der Tauschobjekte stets subjektiv ist und meist nicht dem realen Nutzen des Tauschobjektes für den jeweiligen Tauschpartner entspricht. Zudem verkompliziert die Einführung einer geldwerten Verrechnungsgröße oft das Tauschgeschäft und macht eine größere Anzahl an Transaktionsschritten bzw. eine aufwändigere Korrespondenz der Tauschpartner erforderlich.

Es ist daher das Ziel der vorliegenden Erfindung, ein Verfahren zum Austausch von Daten bzw. Dateiobjekten innerhalb eines für eine beliebige Anzahl an Endnutzern zugänglichen Kommunikationsnetzwerkes bereitzustellen, welches jeweils miteinander handelnden Endnutzern ein effizientes und sicheres Tauschen von Daten bzw. Dateiobjekten ermöglicht.

Ein solches Verfahren soll ein größtmögliches Maß an Transparenz und Fairness für alle Beteiligten gewährleisten und die aus existierenden Online-Tauschsystemen bekannten Risiken und Mängel, insbesondere die Möglichkeit eines Betrugs mit manipulierten oder vorgetäuschten Dateiobjekten verhindern.

Der hierbei erfolgende Austausch von Dateiobjekten soll direkt und ohne Zuhilfenahme einer geldwerten oder virtuellen Verrechnungsgröße erfolgen.

Es ist ein weiteres Ziel der vorliegenden Erfindung, den am Kommunikationsnetzwerk teilnehmenden Endnutzern einen kreativen Spielraum bei der Gestaltung von Tauschhandeln und in der Disposition von angebotenen und nachgefragten Dateiobjekten zu ermöglichen.

Das erfindungsgemäße Verfahren soll im Übrigen schnell und unter Durchführung einer möglichst geringen Anzahl an Prozessschritten durchführbar sein, sodass auch neu zum Kommunikationsnetzwerk hinzustoßende Endnutzer rasch mit den im erfindungsgemäßen Verfahren angebotenen Modalitäten zurechtkommen.

Diese Ziele werden durch ein Verfahren mit den Merkmalen des Anspruchs 1 erreicht, bei welchem Daten von mindestens zwei Endnutzern in Form von Dateiobjekten bereitgestellt werden. Erfindungsgemäß ist zum Zwecke eines gesicherten Austausches dieser Dateiobjekte eine zentrale Verwaltungseinheit, z.B. ein Server, sowie mindestens ein der zentralen Verwaltungseinheit zugeordnetes Speichermedium vorgesehen, wobei die Dateiobjekte in einem ersten Verfahrensschritt von den am Kommunikationsnetzwerk teilnehmenden Endnutzern an die zentrale Verwaltungseinheit übermittelt ("upgeloaded") und von der zentralen Verwaltungseinheit mit einer Identifikationskennung versehen und auf dem Speichermedium (vorzugsweise temporär) archiviert und gegen unautorisierten Zugriff geschützt werden. Je nach Anwendungsfall können die von der zentralen Verwaltungseinheit administrierten Zugriffsautorisierungen weiter oder restriktiver gefasst sein. Bei der zentralen Verwaltungseinheit kann es sich auch um einen Rechner- bzw. Serververbund handeln, welche Rechner bzw. Server wiederum auf ein in beliebigen Hierarchien gegliedertes und örtlich nicht festgelegtes System an Speichermedien bzw. Datenbanken zugreifen können.

Die zentrale Verwaltungseinheit generiert für jeden Endnutzer eine auch für jeweils andere Endnutzer einsehbare Tauschliste, in welcher die jeweils einem Endnutzer zugeordneten Dateiobjekte angeführt sind, wobei von einem ersten Endnutzer eine Auswahl jener Dateiobjekte aus der Tauschliste eines zweiten Endnutzers vorgenommen und an die zentrale Verwaltungseinheit übermittelt werden kann, welche im Austausch gegen eine ebenfalls vom ersten Endnutzer vorgenommene Auswahl an Dateiobjekten aus seiner eigenen Tauschliste angefragt wird. In der Folge wird aus diesen beiden Auswahlen ein Anbotsdatensatz erstellt, welcher von der zentralen Verwaltungseinheit an den zweiten Endnutzer übermittelt wird, wobei im Falle einer Bestätigung des Anbotsdatensatzes durch den zweiten Endnutzer eine Übermittlung der der Auswahl aus der Tauschliste des ersten Endnutzers entsprechenden Dateiobjekte an den zweiten Endnutzer und eine Übermittlung der der Auswahl aus der Tauschliste des zweiten Endnutzers entsprechenden Dateiobjekte an den ersten Endnutzer erfolgen kann bzw. ein Download der betreffenden Dateien zugelassen wird.

Selbstverständlich können die Tauschlisten auch jeweils nur ein einziges Dateiobjekt aufweisen, insofern eine einzelne Indexierung zum Tausch angebotener Dateiobjekte der Endnutzer erfolgt.

Durch das erfindungsgemäße Verfahren wird also für tauschinteressierte Endnutzer eine Plattform geschaffen, welche ein effizientes und sicheres Austauschen von Daten bzw. Dateiobjekten ermöglicht. Für die jeweils miteinander handelnden Endnutzer ist fortan das Risiko ausgeschlossen, dass einer der Tauschpartner seine Verpflichtung zur Bereitstellung der angebotenen Dateiobjekte nicht einhält. Eine Übermittlung bzw. ein Download von Dateiobjekten, für welche ein Tauschanbot noch nicht bestätigt wurde, ist sicher verhindert, da die zentrale Verwaltungseinheit als neutrale Instanz quasi eine "Treuhandschaft" für die jeweils zwischen den Endnutzern verhandelten Dateiobjekte übernimmt. Auf diese Weise wird für alle am Kommunikationsnetzwerk teilnehmenden Endnutzer ein größtmögliches Maß an Transparenz und Fairness gewährleist.

Das erfindungsgemäße Verfahren kann schnell und effizient ausgeführt werden und macht eine langwierige und verzögerte Korrespondenz der handelnden Endnutzer, so wie aus existierenden Online-Tauschbörsen bekannt, entbehrlich.

Da das erfindungsgemäße Verfahren einen sicheren direkten Austausch von Dateiobjekten erlaubt, ist es auch nicht notwendig, eine geldwerte oder virtuelle Verrechnungsgröße in das Tauschgeschäft miteinzubeziehen. Dateiobjekte werden also zu ihrem am subjektiven Nutzwert einzelner Endnutzer bemessenen Wert gehandelt und nicht mittels eines artifiziellen Wertsystems veranschlagt.

Durch die Möglichkeit, Tauschvorschläge in Form von Auswahlen aus der eigenen und aus fremden Tauschlisten zu unterbreiten, wird den am Kommunikationsnetzwerk teilnehmenden Endnutzern ein kreativer und übersichtlicher Gestaltungsraum geboten.

Auch neu zum Kommunikationsnetzwerk hinzukommende Endnutzer können sich hierbei rasch zurechtfinden und stets auf einen geregelten Ablauf der Interaktion mit anderen Endnutzern vertrauen.

In einer bevorzugten Ausführungsvariante des erfindungsgemäßen Verfahrens ist es vorgesehen, dass der zweite Endnutzer den vom ersten Endnutzer übermittelten Anbotsdatensatz bzw. die Auswahl von Dateiobjekten aus den Tauschlisten seinerseits ändern und dem ersten Endnutzer einen neuen, modifizierten Anbotsdatensatz übermitteln kann. Hierbei kann solange eine wechselseitige Übermittlung von Anbotsdatensätzen zwischen den Endnutzern erfolgen, bis einer der Endnutzer einen erhaltenen Anbotsdatensatz bestätigt oder ablehnt. Auf diese Weise können die jeweiligen Endnutzer auf faire und leicht nachvollziehbare Art über ein Tauschgeschäft verhandeln. Miteinander verhandelnde Endnutzer können sich sukzessive aneinander annähern, ohne dass bei einer Willensäußerung bzw. -änderung eines der Endnutzer eine ganz neue Korrespondenz zwischen den jeweiligen Endnutzern gestartet werden müsste.

Um unlautere Manipulationen an den vom Anbotsdatensatz umfassten Dateiobjekten seitens eines Endnutzers zu verhindern, ist es in einer weiteren bevorzugten Ausführungsvariante des erfindungsgemäßen Verfahrens vorgesehen, dass mit dem Erstellen eines Anbotsdatensatzes jeweils eine Blockierung der Verfügungsbefugnis der im Anbotsdatensatzes angeführten Dateiobjekte auf dem Speichermedium der zentralen Verwaltungseinheit einhergeht. Insbesondere ist hierdurch ein Löschen oder ein Anbieten eines dieser Dateiobjekte in einem parallel erstellten Anbotsdatensatz an einen dritten Endnutzer verhindert.

Selbstverständlich wird eine solche Blockierung der Verfügungsbefugnis im Falle einer Ablehnung des jeweiligen Anbotsdatensatzes oder im Falle eines Entfernens eines Dateiobjektes aus einem (modifizierten) Anbotsdatensatz oder nach Ablauf einer definierten Gültigkeitsspanne wieder aufgehoben und das jeweilige Dateiobjekte kann erneut Gegenstand eines Tauschangebots sein bzw. in einer neuen Auswahl angeführt werden.

Die Identifikationskennung der von den Endnutzern an die zentrale Verwaltungseinheit upgeloadeten Dateiobjekte kann zwecks optimaler Administrierbarkeit folgende Parameter umfassen:
-) die Speicheradresse für die Dateiobjekte und/oder
-) eine Zuordnung zum verfügungsbefugten Endnutzer und/oder
-) eine Zuordnung zu einem Anbotsdatensatz und/oder
-) eine Inhaltsinformation der Dateiobjekte, wobei es sich etwa um eine Beschreibung und/oder ein Bild und/oder einen vom verfügungsbefugten Endnutzer zur Begutachtung freigegebenen Teil der Dateiobjekte handeln kann. Eine solche Inhaltsinformation kann in der entsprechenden Tauschliste des verfügungsbefugten Endnutzers ersichtlich sein und dient jeweils der Begutachtung der in der Tauschliste angebotenen Dateiobjekte für andere interessierte Endnutzer, ohne dass jedoch der eigentliche Inhalt des Dateiobjekte freigegeben werden müsste. Es sei angemerkt, dass zu diesem Zwecke der Begutachtung bzw. Exposition jeweiliger Dateiobjekte jede beliebige graphische oder akustische oder Multimedia-Kompilation herangezogen werden.

Ausgewählte Identifikationskennungs-Parameter eines Dateiobjektes, insbesondere die Inhaltsinformation bzw. eine dem Dateiobjekt zugeordnete Multimedia-Kompilation, können vom jeweils verfügungsbefugten Endnutzer verändert werden, jedoch nur, sofern dieses Dateiobjekt aktuell nicht in einem Anbotsdatensatzes angeführt ist.

Ebenso ist es in einer bevorzugten Ausführungsvariante des erfindungsgemäßen Verfahrens möglich, dass die Tauschlisten vom jeweils verfügungsbefugten Endnutzer änderbar sind. Dies bedeutet, dass etwa neue Dateiobjekte zu der zuletzt angelegten Tauschliste hinzugefügt oder darin angeführte Dateiobjekte gelöscht werden können, sofern diese Dateiobjekte aktuell nicht in einem Anbotsdatensatzes angeführt sind.

Es sei an dieser Stelle angemerkt, dass es für einen Endnutzer auch möglich ist, in der durch das erfindungsgemäße Verfahren gebildeten Tauschplattform mehrere Tauschlisten anzulegen und gleichzeitig zu führen. Diese Tauschlisten können - müssen aber nicht - thematisch gegliedert sein, sodass derselbe Endnutzer etwa eine erste Tauschliste betreffend Audio-Files, eine zweite Tauschliste betreffend Video-Streams und eine dritte Tauschliste betreffend E-Books führt.

Ein zuvor beschriebenes "Ändern" der Tauschliste kann in diesem Zusammenhang auch ein Verschieben eines Dateiobjektes in eine weitere dem jeweiligen Endnutzer zugeordnete Tauschliste bedeuten.

Sind zwei Endnutzer handelseins geworden und wurde ein offerierter Anbotsdatensatz bestätigt, so sind in der Folge mehrere Modi zur Übermittlung der Dateiobjekte bzw. zum Download an die Endnutzer möglich. Die Übermittlung der der Auswahl aus der Tauschliste des ersten Endnutzers entsprechenden Dateiobjekte an den zweiten Endnutzer kann synchron mit der Übermittlung der der Auswahl aus der Tauschliste des zweiten Endnutzers entsprechenden Dateiobjekte an den ersten Endnutzer erfolgen. Auf diese Weise wird keiner der beiden handelseinigen Endnutzer bei der Belieferung mit den angeforderten Dateiobjekten bevorzugt und ein unlauteres Manipulieren oder Zurückziehen eines Dateiobjektes durch einen der Endnutzer ist verhindert.

Alternativ dazu ist es im Falle einer Bestätigung eines Anbotsdatensatzes auch möglich, dass die Übermittlung der im Anbotsdatensatz angeführten Dateiobjekte an die Endnutzer zu einem jeweils von den Endnutzern definierten Zeitpunkt erfolgt. Es kann diesfalls also nach Erhalt einer Zugriffsermächtigung ein beliebiger Download der Dateiobjekte vom Speichermedium der zentralen Verwaltungseinheit durch die Endnutzer erfolgen. Insofern kann auf individuelle Vorraussetzungen, z.B. auf aktuell vorhandene Speicherkapazitäten seitens der Endgeräte der Endnutzer Rücksicht genommen werden.

In einer bevorzugten Ausführungsvariante des erfindungsgemäßen Verfahrens ist es vorgesehen, dass die Tauschlisten um ein Datenfeld erweitert sind, in welchem die jeweils verfügungsbefugten Endnutzer ein oder mehrere innerhalb des Kommunikationsnetzwerkes gesuchte Dateiobjekte anführen können. Auf diese Art werden unnötige Kontaktaufnahmen unter Endnutzern vermieden und ein im Kommunikationsnetzwerk gesuchtes Dateiobjekt kann schneller gefunden werden.

Um den teilnehmenden Endnutzern eine erhöhte Sicherheit beim Austausch gehandelter Dateiobjekte zu ermöglichen, ist es in einer erweiterten Ausführungsvariante des erfindungsgemäßen Verfahrens vorgesehen, dass in der zentralen Verwaltungseinheit diverse Verifizierungsprozesse durchgeführt werden, mittels welcher die von den Endnutzern übermittelten Dateiobjekte hinsichtlich folgender Merkmale überprüft werden:
-) einer Fehlerhaftigkeit jeweiliger Dateiobjekte und/oder
-) der Vollständigkeit jeweiliger Dateiobjekte und/oder
-) der Identität jeweiliger Dateiobjekte mit einem vom übermittelnden Endnutzer angegebenen Inhalt und/oder
-) die Autorisierung des Endnutzers zur Bereitstellung der jeweiligen Dateiobjekte.
Hierbei wird im Falle einer negativen Verifizierung eines der angeführten Merkmale (und "negative" Verifizierung meint in diesem Zusammenhang die Feststellung eines Mangels eines jeweils bereitgestellten Dateiobjektes) eine den jeweiligen Mangel kommunizierende Meldung an eine dafür vorgesehene Informationseinrichtung und/oder an den das betreffende Dateiobjekt bereitstellenden Endnutzer, eventuell sogar an weitere involvierte Endnutzer einhergeht. Die Informationseinrichtung entscheidet in der Folge darüber, ob das gegenständliche, mit einem Mangel behaftete Dateiobjekt auf dem Speichermedium der zentralen Verwaltungseinheit archiviert und somit auf der Tauschplattform zugelassen wird oder nicht.

Die Erfindung wird nun anhand eines Ausführungsbeispiels näher erläutert. Dabei zeigt:
- Fig.1: eine schematische Darstellung eines erfindungsgemäßen Kommunikationsnetzwerkes
- Fig.2: eine schematische Darstellung einer erfindungsgemäßen Anbotsdatensatzerstellung
- Fig.3: eine schematische Darstellung eines erfindungsgemäßen Verfahrens

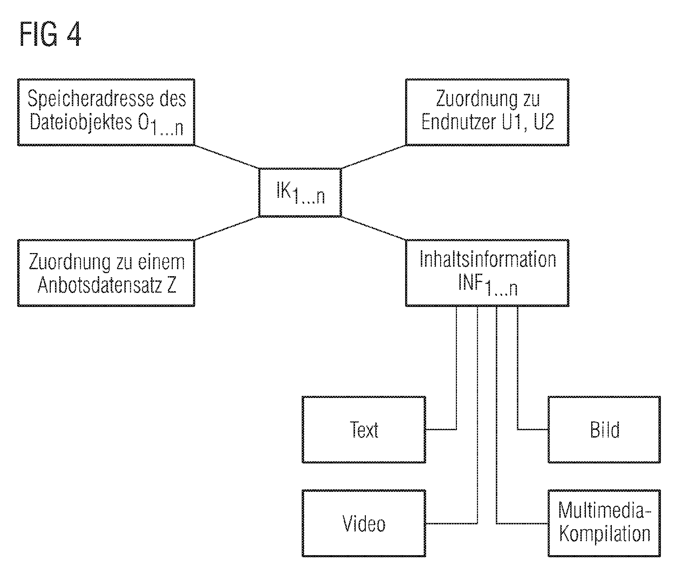

- Fig.4: eine schematische Darstellung von Parametern einer erfindungsgemäßen Identifikationskennung

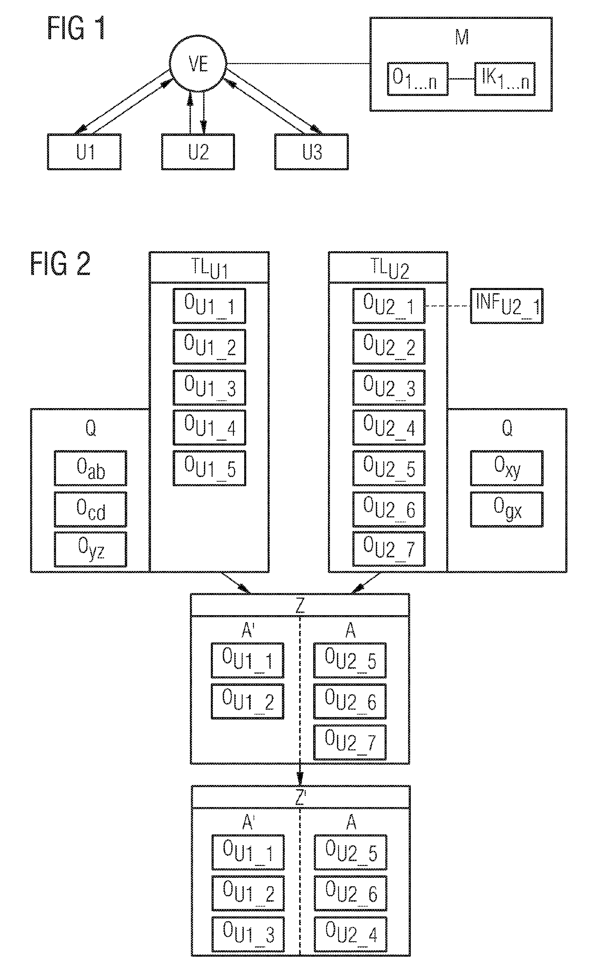

Beim in Fig.1 dargestellten System handelt es sich um eine virtuelle Tauschplattform im Internet, wobei eine Beliebige Anzahl an Endnutzern U - rein beispielhaft dargestellt sind drei Endnutzer U1, U2, U3 - über eine zentrale Verwaltungseinheit VE miteinander in Beziehung treten, um elektronische Daten in Form von Dateiobjekten O_{1...n} auszutauschen.

Bei der zentralen Verwaltungseinheit VE handelt es sich um einen von einem Serviceanbieter betriebenen Server, also um einen auf einem Host installierten programmgesteuerten Prozess, welcher mittels einer definierten Adresse (URL, Uniform Resource Locator) von den Endnutzern U bzw. durch ein an deren Endgeräten installiertes Client-Programm kontaktiert und mit Anfragen betraut werden kann.

Die Endnutzer U sind jeweils mit internetfähigen Endgeräten mitsamt zur lokalen Datenspeicherung und -auslesung erforderlichen Peripherieeinrichtungen ausgestattet. Insbesondere werden zur Datenspeicherung allgemein bekannte digitale Speichereinrichtungen wie Festplatten, CDs/DVDs und flash-Speicher wie SD- oder MMC-Karten sowie USB-Memory-Sticks verwendet.

Von diesen lokalen Speichereinrichtungen auf Seiten der Endnutzer U werden nun in der Verfügungsbefugnis der jeweiligen Endnutzer U stehende Dateiobjekte O_{1...n} über entsprechendes Übertragungsprotokoll, z.B. ein FTP-Protokoll an die zentrale Verwaltungseinheit VE übermittelt, was in der Fachsprache auch als "Upload" bezeichnet wird. Üblicherweise kann ein solcher Upload von Dateiobjekten O_{1...n} bzw. eine Teilnahem an der von der zentrale Verwaltungseinheit VE gebildeten Tauschplattform erst nach einer erfolgreichen Registrierung bzw. Anlegung eines Benutzerkontos und nach Eingabe einer entsprechenden vom Serviceanbieter mitgeteilten Zugangskennung zu diesem Benutzerkonto erfolgen.

Zur Speicherung der von den Endnutzern U upgeloadeten Dateiobjekte O_{1...n} ist die zentrale Verwaltungseinheit VE mit einem zugeordneten, gemeinhin auch als "Webspace" bezeichneten Speichermedium M versehen, wobei es sich bei diesem Speichermedium M selbstverständlich um ein beliebig verknüpftes und auch auf unterschiedliche Rechner bzw. Server verteiltes Datenbank-System handeln kann. Es sei angemerkt, dass auch die Endnutzer U über einen privaten Webspace eines beliebigen Dienstleisters verfügen und von dort aus ihre Dateiobjekte O_{1...n} an die zentrale Verwaltungseinheit VE uploaden können.

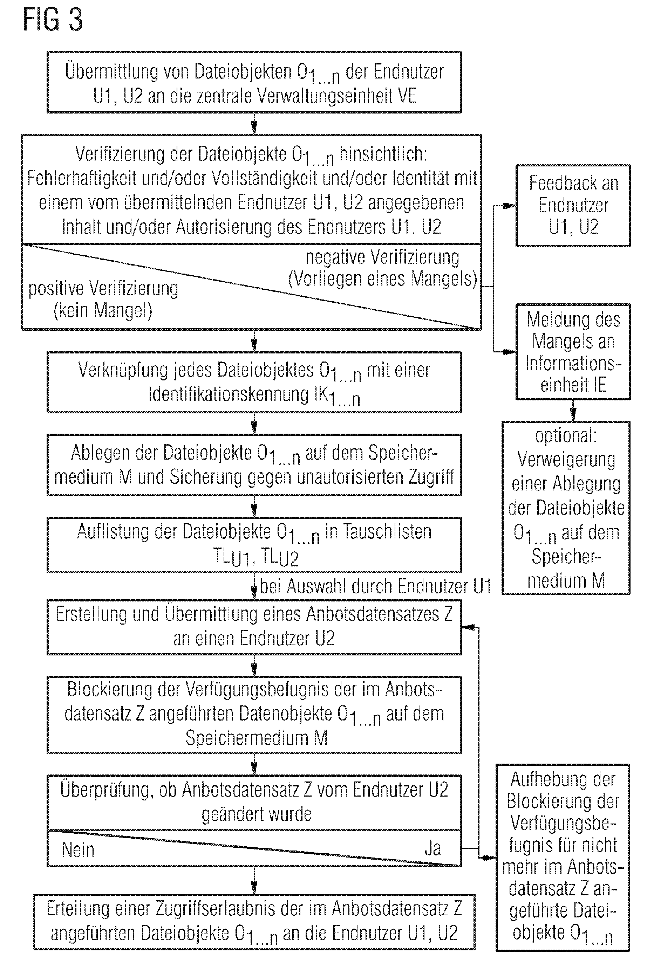

Bevor jedoch ein neu upgeloadetes Dateiobjekt O_{1...n} am Speichermedium M der zentralen Verwaltungseinheit VE archiviert und in die virtuelle Tauschplattform eingebracht wird, kann optional eine Überprüfung dieses Dateiobjektes O_{1...n} in Hinblick auf allfällige Mängel erfolgen (siehe auch Flussdiagramm gemäß Fig.3). Zu diesem Zwecke werden in der zentralen Verwaltungseinheit VE diverse Verifizierungsprozesse durchgeführt, welche die von den Endnutzern U übermittelten Dateiobjekte O_{1...n} gemäß vorgegebener Kriterien, welche dem jeweiligen Endnutzer U bereits im Zuge seiner Registrierung vom Serviceanbieter mitgeteilt wurden, überprüfen.

Häufig ist es z.B. der Fall, dass von den Endnutzern U zur zentralen Verwaltungseinheit VE upgeloadete Dateiobjekte O_{1...n} fehlerhaft oder unvollständig und daher unbrauchbar sind. Fehlerhaft bzw. unbrauchbar ist ein Dateiobjekt O_{1...n} auch dann, wenn die Qualität der darin enthaltenen Multimedia-Information mangelhaft ist bzw. unter dem üblicherweise zu erwartenden Niveau liegt. Für Audio- oder Videofiles wird etwa stets eine gewisse Mindestauflösung gefordert sein, um die jeweiligen Inhalte auch adäquat auf entsprechenden Endgeräten darstellen/abspielen zu können. Zu diesem Zweck kann seitens der zentralen Verwaltungseinheit VE etwa die Pixelanzahl von Videographiken oder die Abtastfrequenz von Audio-Aufnahmen analysiert und als akzeptabel oder als mangelhaft qualifiziert werden.

Unter Fehlerhaftigkeit wird in diesem Zusammenhang auch die Behaftung von Dateiobjekten O_{1...n} mit Malware, also mit bewusst oder unbewusst an die zentrale Verwaltungseinheit VE upgeloadeten schadhaften Computerprogrammen wie Viren, Trojanern und Spyware verstanden.

Ein Erfordernis einer funktionierenden Tauschplattform ist es auch vielfach, die Identität jeweiliger Dateiobjekte O_{1...n} festzustellen, indem die vom Dateiobjekte O_{1...n} übermittelnden Endnutzer U angegebenen Inhaltsbezeichnungen mit dem tatsächlichen Inhalt dieser Dateiobjekte O_{1...n} verglichen werden. Dies kann z.B. durch Online-Datenbank-Recherchen bewerkstelligt werden. Auch die Autorisierung eines Endnutzers U zur Bereitstellung der jeweiligen Dateiobjekte O_{1...n} kann überprüft werden, indem z.B. für gewisse Dateiformate bzw. Programme eine gültige Registrierungsnummer abgefragt wird.

Unabhängig davon, welche der genannten Merkmale in der Praxis tatsächlich überprüft werden, ergeht im Falle einer negativen Verifizierung eines dieser Merkmale bzw. bei Feststellung eines Mangels eines jeweils analysierten Dateiobjektes O_{1...n} eine den jeweiligen Mangel kommunizierende Meldung an eine dafür vorgesehene Informationseinrichtung IE. Die Informationseinrichtung IE kann ein ebenfalls auf dem Host der zentralen Verwaltungseinheit VE installiertes Programm sein, welches je nach Schwere des vorliegenden Mangels entweder eine Speicherung bzw. Archivierung des jeweiligen Dateiobjektes O_{1...n} auf dem Speichermedium M der zentralen Verwaltungseinheit VE nicht oder nur unter Vorbehalt, z.B. unter Vornahme einer eindeutigen Kennzeichnung des jeweiligen Mangels (etwa einer Unterlegung des in einer jeweiligen Tauschliste TL angeführten Dateiobjektes O_{1...n} mit einer Signalfarbe), zulässt. Gegebenenfalls kann auch eine entsprechende Meldung an den das betreffende Dateiobjekt O_{1...n} bereitstellenden Endnutzer U oder auch an weitere involvierte Endnutzer U oder andere Instanzen erfolgen.

Haben die von den Endnutzern U upgeloadeten Dateiobjekte O_{1...n} die beschriebenen Verifizierungsprozesse erfolgreich durchlaufen, so werden sie von der zentralen Verwaltungseinheit VE mit einer Identifikationskennung IK_{1...n} versehen und auf dem Speichermedium M abgelegt. Die nun auf dem Speichermedium M archivierten Dateiobjekte O_{1...n} sind fortan gegen unautorisierten Zugriff geschützt und für andere Endnutzer U nicht direkt einsehbar.

Die Identifikationskennung IK_{1...n} dient einer eindeutigen Kennzeichnung der Dateiobjekte O_{1...n} und kann folgende Parameter umfassen (siehe Fig.5):
-) eine für die Dateiobjekte O_{1...n} am Speichermedium M der zentralen Verwaltungseinheit VE vorgesehene Speicheradresse und/oder
-) eine Zuordnung zum jeweils verfügungsbefugten Endnutzer U1, U2 und/oder
-) eine (aktualisierbare) Zuordnung zu einem noch in der Folge beschriebenen Tauschgeschäft bzw. einem Anbotsdatensatz Z.

Gleichfalls werden die Dateiobjekte O_{1...n} mit einer kurzen oder ausführlicheren Inhaltsinformation INF_{1...n}, im Minimalfall nur mit einer Titelbezeichnung versehen, welche in der Regel vom die Dateiobjekte O_{1...n} bereitstellenden Endnutzer U selbst erstellt und mitsamt der Dateiobjekte O_{1...n}, oder auch nachträglich, auf die zentrale Verwaltungseinheit VE upgeloaded wurde. Zum Zwecke der Inhaltsinformation INF_{1...n}, welche fortan für alle am Kommunikationsnetzwerk bzw. an der Tauschplattform teilnehmenden Endnutzer U frei ersichtlich oder abrufbar ist, können beliebig zusammengestellte Multimedia-Inhalte eingesetzt werden, so z.B. Kurzbeschreibungen, Referenzangaben, Bilder, Hörproben, Intros von in den Dateiobjekten O_{1...n} enthaltenen Videos oder Musikstücken, Exzerpte aus E-Books, ganz allgemein gesprochen beliebige Texte, Audio- oder Video-Sequenzen, welche den an der Tauschplattform teilnehmenden Endnutzer U über den Inhalt jeweils zum Tausch angebotener Dateiobjekte O_{1...n} aufklären.

Die zentrale Verwaltungseinheit VE generiert in der Folge für jeden in der Tauschplattform registrierten bzw. uploadenden Endnutzer U eine auch für jeweils andere Endnutzer U einsehbare Tauschliste TL, in welcher die einem Endnutzer U zugeordneten Dateiobjekte O_{1...n} angeführt sind. Die Auflistung der Dateiobjekte O_{1...n} in den Tauschlisten TL kann anhand beliebiger Kriterien vorgenommen werden, so etwa der alphabetischen Reihenfolge folgend oder auch gemäß Themengebieten strukturiert.

In Fig.2 sind rein beispielhaft zwei Tauschlisten TL_{U1} und TL_{U2} dargestellt, wobei in der Tauschliste TL_{U1} sämtliche von einem ersten Endnutzer U1 an die zentrale Verwaltungseinheit VE übermittelten Dateiobjekte O_{1...n} angeführt sind, während in der Tauschliste TL_{U2} sämtliche von einem zweiten Endnutzer U2 an die zentrale Verwaltungseinheit VE übermittelten Dateiobjekte O_{1...n} aufgelistet sind.

In den entsprechenden Tauschlisten TL_{U1}, TL_{U2} sind auch die bereits erwähnten Inhaltsinformationen INF_{1...n} bzw. Beschreibungen der Dateiobjekte O_{1...n} ersichtlich. Die Inhaltsinformationen INF_{1...n} können entweder permanent sichtbar bzw. parallel zu der Bezeichnung der Dateiobjekte O_{1...n} in einem Browserfenster dargestellt werden oder auch nur auf Anfrage eines Endnutzers U. Bevorzugt wird ein temporäres Darstellen der Inhaltsinformationen INF_{1...n} für den Zeitraum, in welchem ein Endnutzer U einen Mauszeiger über die Bezeichnung eines jeweiligen Dateiobjektes O_{1...n} führt. In solchem Falle wird etwa eine in Fig.2 beispielhaft dargestellte Inhaltsinformationen INF_{U2} für ein Dateiobjekt O_{U2_1} angezeigt, welche einem die Tauschliste TL_{U2} des zweiten Endnutzers U2 sichtenden Endnutzer U nähere Details über das zum Tausch angebotene Dateiobjekt O_{U2_1} offenbart. Ob die Inhaltsinformationen INF_{U2_1} nur für an der Tauschplattform registrierte Endnutzer U oder auch für noch nicht registrierte Endnutzer U zugänglich ist, obliegt der konkreten Ausgestaltung des Systems. Jedenfalls muss ein aktiv auf der Tauschplattform agierender Endnutzer U registriert sein bzw. ein Benutzerkonto innehaben und eine Tauschliste TL führen.

Die Tauschliste TL kann vom berechtigten Endnutzer U jederzeit geändert, d.h. neue Dateiobjekte O_{1...n} können hinzugefügt bzw. bereits vorhandene Dateiobjekte O_{1...n} können wieder entfernt werden, sofern sie aktuell nicht Gegenstand eines Tauschgeschäfts sind. Ebenso ist der Endnutzer U berechtigt, Inhaltsinformationen INF_{1...n} sowie eventuell auch andere Parameter der Identifikationskennung IK_{1...n} eigener Dateiobjekte O_{1...n} zu ändern bzw. zu aktualisieren.

Hat sich nun z.B. der erste Endnutzer U1 über den Inhalt der Dateiobjekte O_{U2_5} ,O_{U2_6} O_{U2_7} des zweiten Endnutzers U2 informiert und möchte diese im Tauschhandel erwerben, so kann er diese - beispielsweise mittels Mausklick - in der dem zweiten Endnutzer U2 zugeordneten Tauschliste TL_{U2} anwählen und solcherart eine Auswahl A gewünschter Dateiobjekte erstellen. Im Gegenzug muss der erste Endnutzer U1 jedoch auch eine Auswahl A' an Dateiobjekten O_{1...n} aus seiner eigenen Tauschliste TL_{U1} treffen, welche er dem Endnutzer U2 anbietet. Im vorliegenden Beispiel gemäß Fig.2 hat sich der Endnutzer U1 etwa entschieden, die Dateiobjekte O_{U1_1} und O_{U1_2} anzubieten, um diese gegen die Dateiobjekte O_{U2_5}, O_{U2_6}, O_{U2_7} des zweiten Endnutzers U2 auszutauschen.

Es ist hierbei nicht von Relevanz, welche der durch einen Endnutzer U getätigten Auswahlen A (umfassend die vom jeweils anderen Endnutzer U gewünschten Dateiobjekte O_{1...n}) und A' (umfassend die eigenen Dateiobjekte O_{1...n}) der jeweils anderen zeitlich vorangeht.

Aus den beiden getroffenen Auswahlen A und A' wird von der zentralen Verwaltungseinheit VE in der Folge ein Anbotsdatensatz Z erstellt, welcher dem zweiten Endnutzer U2 übermittelt wird. Eine solche Übermittlung des Anbotsdatensatzes Z kann in der für Online-Transaktionen üblichen Form geschehen, beispielsweise per E-Mail an eine Privatadresse oder ein auf der Tauschplattform vorhandenes Benutzerkonto des Endnutzers U2, per SMS oder über ein Web-Fenster der Tauschplattform. Selbstverständlich wäre es auch möglich, die Übermittlung des Anbotsdatensatzes Z über klassische Wege der Korrespondenz wie etwa Post, Telefon oder Telefax zu vollziehen.

Parallel zur Erstellung des Anbotsdatensatzes Z erfolgt eine von der Verwaltungseinheit VE veranlasste temporäre Blockierung der Verfügungsbefugnis der im Anbotsdatensatz Z angeführten Dateiobjekte O_{U1_1}, O_{U1_2}, O_{U2_5}, O_{U2_6} und O_{U2_7}, sodass diese auf dem Speichermedium M der zentralen Verwaltungseinheit VE nicht mehr geändert, gelöscht, verschoben oder in einen alternativen Anbotsdatensatz Z an einen dritten Endnutzer U3 eingebracht werden können.

Der den aktuellen Anbotsdatensatz Z entgegennehmende zweite Endnutzer U2 hat nun drei Möglichkeiten:
1.) Er kann das Tauschanbot bzw. den Anbotsdatensatz Z ablehnen. Diese Option kann z.B. in Form eines entsprechenden per Maus anklickbaren Buttons mit dem Logo "ABLEHNEN" im Browserfenster aufscheinen. Bei Aktivierung dieses Buttons wird der aktuelle Anbotsdatensatz Z augenblicklich gelöscht. Damit einhergehend wird die blockierende Wirkung des Anbotsdatensatzes Z auf die Verfügungsbefugnis der darin angeführten Dateiobjekte O_{U1_1}, O_{U1_2}, O_{U2_5}, O_{U2_6} und O_{U2_7} aufgehoben und die genannten Dateiobjekte können von den jeweils berechtigten Endnutzern U1, U2 wieder geändert, gelöscht oder in ein anderes Tauschgeschäft bzw. einen neuen Anbotsdatensatz Z eingebracht werden.
2.) Der zweite Endnutzer U2 kann das Tauschanbot bzw. den Anbotsdatensatz Z annehmen. Diese Option kann ebenfalls in Form eines entsprechenden per Maus anklickbaren Buttons mit dem Logo "ANNEHMEN" oder "SENDEN" im Browserfenster aufscheinen. Bei Aktivierung dieses Buttons gibt der zweite Endnutzer U2 seine unwiderrufliche Zustimmung zum Tauschanbot des ersten Endnutzers U1 und die in der Auswahl A angeführten Dateiobjekte O_{U2_5}, O_{U2_6}, O_{U2_7} werden zur Übermittlung an den ersten Endnutzer U1 freigegeben, während die in der Auswahl A' angeführten Dateiobjekte O_{U1_1} und O_{U1_2} zur Übermittlung an den zweiten Endnutzer U1 freigegeben werden.
3.) Der zweite Endnutzer U2 kann den erhaltenen Anbotsdatensatz Z ändern. Hierbei kann der Endnutzer U2 sowohl die Auswahl A, also die vom ersten Endnutzer U1 gewünschten Dateiobjekte O_{1...n}, als auch die Auswahl A', also die aus der Tauschliste TL_{U1} des ersten Endnutzers U1 ausgewählten Dateiobjekte O_{1...n} ändern und dem ersten Endnutzer sodann einen neuen, modifizierten Anbotsdatensatz Z' übermitteln.

Im vorliegenden Beispiel gemäß Fig.2 ist der zweite Endnutzer U2 etwa mit dem vom ersten Endnutzer U1 erhaltenen Anbotsdatensatz Z nicht zufrieden, sondern er wünscht sich, zusätzlich zu den vom ersten Endnutzer U1 angebotenen Dateiobjekte O_{U1_1} und O_{U1_2} auch noch dessen Dateiobjekt O_{U1_3} zu erhalten und wählt dieses in der Tauschliste TL_{U1} des ersten Endnutzers U1 an bzw. fügt das Dateiobjekt O_{U1_3} zur Auswahl A' hinzu. Des Weiteren ist der zweite Endnutzer U2 nicht gewillt, das ihm zugeordnete, vom ersten Endnutzer U1 angeforderte Dateiobjekt O_{U2_7} einzutauschen. Der zweite Endnutzer U2 entfernt also das Dateiobjekt O_{U2_7} aus der Auswahl A, bietet dem ersten Endnutzer U1 jedoch einen Ersatz an, nämlich das Dateiobjekt O_{U2_4}. Diese geänderten Auswahlen A, A' werden dem ersten Endnutzer U1 in Form eines neuen, modifizierten Anbotsdatensatzes Z' übermittelt.

Jetzt hat wiederum der erste Endnutzer U1 die drei voranstehend beschriebenen Möglichkeiten, auf das neue Tauschanbot bzw. auf den modifizierten Anbotsdatensatz Z' zu reagieren: Er kann den vom zweiten Endnutzer U2 offerierten Anbotsdatensatz Z' annehmen, ablehnen oder er kann weiterverhandeln, indem er seinerseits Änderungen in einer oder in beiden Auswahlen A und A' tätigt und die Übermittlung eines weiteren modifizierten Anbotsdatensatzes Z'' (nicht dargestellt) an den zweiten Endnutzer veranlasst.

Eine derartige wechselseitige Übermittlung von Anbotsdatensätzen Z, Z', Z'', Z''' ist vom Quantum her nicht limitiert und kann nach Gutdünken der Endnutzer U1, U2 solange erfolgen, bis einer der Endnutzer U1, U2 einen erhaltenen Anbotsdatensatz Z bestätigt oder ablehnt.

Rein funktional gesehen wird nach jeder Übermittlung eines Anbotsdatensatzes Z, Z', Z'', Z''' durch einen Endnutzer U1, U2 von der zentralen Verwaltungseinheit VE überprüft, ob dieser aktuelle Anbotsdatensatz Z' mit dem zuletzt vom jeweils anderen Endnutzer U1, U2 ergangenen Anbotsdatensatz Z übereinstimmt oder nicht. Für den Fall einer Übereinstimmung des aktuellen Anbotsdatensatzes Z' mit dem zuletzt ergangenen Anbotsdatensatz Z wird seitens der zentralen Verwaltungseinheit VE eine Übermittlung der jeweils im Anbotsdatensatz Z' gegenständlichen Dateiobjekte O_{1...n} zugelassen oder selbsttätig initiiert.

Je nach Anwendungsgebiet werden zur Übermittlung der gegenständlichen Dateiobjekte O_{1...n} an die handelseinigen Endnutzer U1, U2 an sich bekannte Download- bzw. Streaming-Verfahren samt adäquater Kompressions- und Verschlüsselungsverfahren eingesetzt.

Optional kann unmittelbar nach Bestätigung eines Anbotsdatensatzes Z' noch eine Nachricht an einen oder beide Endnutzer U1, U2 ergehen, in welchem der Abschluss des gegenständlichen Tauschgeschäftes bzw. die Bestätigung des zuletzt erstellten Anbotsdatensatzes Z' dokumentiert ist und nunmehr die Freigabe der betreffenden Dateiobjekte O_{1...n} zum Download bekanntgegeben wird.

Die Übermittlung der in der Auswahl A angeführten Dateiobjekte Dateiobjekte O_{U2_4}, O_{U2_5} und O_{U2_6} an den ersten Endnutzer U1 kann zeitgleich mit der Übermittlung der in der Auswahl A' angeführten Dateiobjekte O_{U1_1} und O_{U1_2} und O_{U1_3} an den zweiten Endnutzer U2 erfolgen. Es ist jedoch auch möglich, dass die jeweiligen Zeitpunkte der Übermittlung der Dateiobjekte O_{1...n} von den Endnutzern U1, U2 selbst determiniert werden kann. Dies kann insbesondere dann von Interesse sein, wenn die gegenständlichen Dateiobjekte O_{1...n} im Streaming-Verfahren übermittelt, also am Endgerät eines Endnutzers U1, U2 gleichzeitig empfangen und wiedergegeben werden.

Im vorliegenden Ausführungsbeispiel ist es vorgesehen, dass die nach Bestätigung eines Anbotdatensatzes Z an die jeweiligen Endnutzer U1, U2 übermittelten Dateiobjekte O_{1...n} nach deren erfolgreicher Übermittlung vom Speichermedium M der zentralen Verwaltungseinheit VE gelöscht werden und somit nicht mehr in den Tauschlisten TL_{U1}, TL_{U2} aufscheinen. Ein solches Löschen muss jedoch nicht notwendigerweise stattfinden, insbesondere dann, wenn z.B. ein Endnutzer U die Urheberrechte eines angebotenen Dateiobjektes O_{1...n} besitzt und diese daher mehrfach anbieten darf.

Es kann weiters vorgesehen sein, dass die erwähnte Blockierung der Verfügungsbefugnis eines Dateiobjektes O_{1...n} im Falle einer Anführung in einem aktuellen Anbotsdatensatz Z nicht nur im Falle einer Ablehnung oder einer Modifizierung des jeweiligen Anbotsdatensatzes Z aufgehoben wird, sondern dass unabhängig davon eine Zeitspanne definiert ist, nach welcher die Gültigkeit der Blockierung des gegenständlichen Dateiobjektes O_{1...n} automatisch aufgehoben wird.

In Fig.2 ist ersichtlich, dass die Tauschlisten TL_{U1}, TL_{U2} jeweils um ein Datenfeld Q erweitert sind, in welchem die jeweils verfügungsbefugten Endnutzer U1, U2 ein oder mehrere innerhalb des Kommunikationsnetzwerkes gesuchte Dateiobjekte O_{ab}, O_{cd}, O_{yz}, O_{xy} und O_{gx} anführen können. Ein die Tauschlisten TL_{U1}, TL_{U2} sichtender Endnutzer U weiß also mitunter sofort, ob ein von ihm beabsichtigter Tausch von Dateiobjekten O_{1...n} erfolgversprechend ist oder nicht.

Aus der bisherigen Beschreibung des erfindungsgemäßen Verfahrens geht hervor, dass eine Vielzahl an Abwandlungen und Verfeinerungen der dargestellten Verfahrensmodi denkbar sind, ohne jedoch von der erfindungswesentlichen Idee abzuweichen.

Beispielsweise ist es möglich, dass ein Endnutzer U1 mehrere Tauschlisten TL_{U1a}, TL_{U1b}, TL_{U1c} führt, welche jeweils (jedoch nicht notwendigerweise) eine Zusammenstellung von gattungsähnlichen Dateiobjekten O_{1...n} enthalten. Sofern Dateiobjekte O_{1...n} nicht Gegenstand eines aktuellen Anbotsdatensatzes Z sind, können jene auch innerhalb der verschiedenen Tauschlisten TL_{U1a}, TL_{U1b}, TL_{U1c} verschoben werden.

Selbstverständlich können die Tauschlisten TL auch jeweils nur ein einziges Dateiobjekt O_{1...n} aufweisen.

Sämtliche im Zuge des erfindungsgemäßen Verfahrens dargestellten Inhalte, Informationen und Eingabemasken können entweder in einem am Endgerät des Endnutzers U installierten Browser selbst oder auch mit einer sogenannten "Helper Applikation" und/oder einem "plug-in" zur Anzeige kommen.

Zur Erleichterung des Navigierens in der Tauschplattform kann die zentrale Verwaltungseinheit VE eine geeignete Suchmaske anbieten, in welcher gesuchte Dateiobjekt O_{1...n} von Endnutzern U angefragt werden können. Gleichfalls kann die zentrale Verwaltungseinheit VE ein alphabetisch geordnetes oder nach Themengebieten oder Dateitypen gegliedertes Verzeichnis bereitstellen, um gesuchte Dateiobjekt O_{1...n} leicht auffindbar zu machen.

Weiters sei angemerkt, dass das erfindungsgemäße Verfahren bzw. die beschriebene Tauschplattform, insbesondere die Erstellung von Tauschlisten TL und wechselweisen Anbotsdatensätzen Z, Z', Z'' nicht nur zum Austausch von elektronischen Daten, sondern prinzipiell auch zum Handel bzw. Austausch beliebiger Güter und Objekte herangezogen werden kann.

## Patentansprüche

1. Verfahren zum Austausch von Daten zwischen mindestens zwei Endnutzern (U1, U2) innerhalb eines Kommunikationsnetzwerkes, wobei die Daten von den Endnutzern (U) in Form von Dateiobjekten (O_{1...n}) bereitgestellt werden, **dadurch gekennzeichnet, dass** eine zentrale Verwaltungseinheit (VE) sowie mindestens ein dieser zugeordnetes Speichermedium (M) vorgesehen ist und die Dateiobjekte (O_{1...n}) in einem ersten Verfahrensschritt von den am Kommunikationsnetzwerk teilnehmenden Endnutzern (U1, U2) an die zentrale Verwaltungseinheit (VE) übermittelt und von dieser mit einer Identifikationskennung (IK_{1...n}) versehen, auf dem Speichermedium (M) archiviert und gegen unautorisierten Zugriff geschützt werden, wobei die zentrale Verwaltungseinheit (VE) für jeden Endnutzer (U1, U2) eine auch für den jeweils anderen Endnutzer (U1, U2) einsehbare Tauschliste (TL_{U1}, TL_{U2}) generiert, in welcher die jeweils einem Endnutzer (U1, U2) zugeordneten Dateiobjekte (O_{1...n}) angeführt sind, wobei vom ersten Endnutzer (U1) eine Auswahl (A) jener Dateiobjekte (O_{1...n}) aus der Tauschliste (TL_{U2}) des zweiten Endnutzers (U2) vorgenommen und an die zentrale Verwaltungseinheit (VE) übermittelt werden kann, welche im Austausch gegen eine ebenfalls vom Endnutzer (U1) vorgenommene Auswahl (A') an Dateiobjekten (O_{1...n}) aus seiner eigenen Tauschliste (TL_{U1}) angefragt wird, und in der Folge aus den beiden Auswahlen (A, A') ein Anbotsdatensatz (Z) erstellt wird, welcher von der zentralen Verwaltungseinheit (VE) an den zweiten Endnutzer (U2) übermittelt wird, wobei im Falle einer Bestätigung des Anbotsdatensatzes (Z) durch den zweiten Endnutzer (U2) eine Übermittlung der der Auswahl (A') aus der Tauschliste TL_{U1} entsprechenden Dateiobjekte (O_{1...n}) an den zweiten Endnutzer (U2) und eine Übermittlung der der Auswahl (A) aus der Tauschliste (TL_{U2}) entsprechenden Dateiobjekte (O_{1...n}) an den ersten Endnutzer (U1) durchführbar ist.

2. Verfahren zum Austausch von Daten nach Anspruch 1, **dadurch gekennzeichnet, dass** der Endnutzer zweite (U2) den vom ersten Endnutzer (U1) übermittelten Anbotsdatensatz (Z) bzw. die Auswahl von Dateiobjekten (O_{1...n}) aus den Tauschlisten (TL_{U1}) und (TL_{U2}) seinerseits ändern und dem ersten Endnutzer (U1) einen neuen, modifizierten Anbotsdatensatz (Z') übermitteln kann, wobei eine wechselseitige Übermittlung von Anbotsdatensätzen (Z, Z', Z'') zwischen den Endnutzern (U1, U2) solange erfolgen kann, bis einer der Endnutzer (U1, U2) einen erhaltenen Anbotsdatensatz (Z, Z', Z'') bestätigt oder ablehnt.

3. Verfahren zum Austausch von Daten nach Anspruch 1 oder 2, **dadurch gekennzeichnet, dass** mit dem Erstellen eines Anbotsdatensatzes (Z) jeweils eine Blockierung der Verfügungsbefugnis der im Anbotsdatensatzes (Z) angeführten Dateiobjekte (O_{1...n}) auf dem Speichermedium (M) der zentralen Verwaltungseinheit (VE) einhergeht, insbesondere ein Löschen oder ein Anbieten eines dieser Dateiobjekte (O_{1...n}) in einem parallel erstellten Anbotsdatensatz (Zₓ) an einen dritten Endnutzer (U3) verhindert ist.

4. Verfahren zum Austausch von Daten nach einem der Ansprüche 1 bis 3, **dadurch gekennzeichnet, dass** die Identifikationskennung (IK_{1...n}) der Dateiobjekte (O_{1...n}) folgende Parameter umfasst:
-) die Speicheradresse für die Dateiobjekte (O_{1...n}) und/oder
-) eine Zuordnung zum verfügungsbefugten Endnutzer (U1, U2) und/oder
-) eine Zuordnung zu einem Anbotsdatensatz (Z) und/oder
-) eine Inhaltsinformation (INF_{1...n}) der Dateiobjekte (O_{1...n}), welche vorzugsweise in der entsprechenden Tauschliste (TL_{U1}, TL_{U2}) der Endnutzer (U1, U2) ersichtlich ist.

5. Verfahren zum Austausch von Daten nach einem der Ansprüche 1 bis 4, **dadurch gekennzeichnet, dass** die Übermittlung der der Auswahl (A') aus der Tauschliste (TL_{U1}) entsprechenden Dateiobjekte (O_{1...n}) an den zweiten Endnutzer (U2) und die Übermittlung der der Auswahl (A) aus der Tauschliste (TL_{U2}) entsprechenden Dateiobjekte (O_{1...n}) an den ersten Endnutzer (U1) im Wesentlichen synchron erfolgt.

6. Verfahren zum Austausch von Daten nach einem der Ansprüche 1 bis 4, **dadurch gekennzeichnet, dass** die Übermittlung der der Auswahl (A') aus der Tauschliste (TL_{U1}) entsprechenden Dateiobjekte (O_{1...n}) an den zweiten Endnutzer (U2) zu einem vom zweiten Endnutzer (U2) definierten Zeitpunkt erfolgt und/oder die Übermittlung der der Auswahl (A) aus der Tauschliste (TL_{U2}) entsprechenden Dateiobjekte (O_{1...n}) an den ersten Endnutzer (U1) zu einem vom ersten Endnutzer (U1) definierten Zeitpunkt erfolgt.

7. Verfahren zum Austausch von Daten nach einem der Ansprüche 1 bis 6, **dadurch gekennzeichnet, dass** die Tauschlisten (TL_{U1}, TL_{U2}) um ein Datenfeld (Q) erweitert sind, in welchem die jeweils verfügungsbefugten Endnutzer (U1, U2) ein oder mehrere innerhalb des Kommunikationsnetzwerkes gesuchte Dateiobj ekte (O_{1...n}) anführen können.

8. Verfahren zum Austausch von Daten nach einem der Ansprüche 1 bis 7, **dadurch gekennzeichnet, dass** die Tauschlisten (TL_{U1}, TL_{U2}) vom jeweils verfügungsbefugten Endnutzer (U1, U2) änderbar sind bzw. neue Dateiobjekte (O_{1...n}) zu der zuletzt angelegten Tauschliste (TL_{U1}, TL_{U2}) hinzugefügt oder darin angeführte Dateiobjekte (O_{1...n}) gelöscht werden können, sofern diese Dateiobjekte (O_{1...n}) aktuell nicht in einem Anbotsdatensatzes (Z) angeführt sind.

9. Verfahren zum Austausch von Daten nach Anspruch 4, **dadurch gekennzeichnet, dass** die Identifikationskennungs-Parameter eines Dateiobjektes (O_{1...n}), insbesondere die Inhaltsinformation (INF_{1...n}) des Dateiobjektes (O_{1...n}) vom jeweils verfügungsbefugten Endnutzer (U1, U2) änderbar sind, sofern dieses Dateiobjekt (O_{1...n}) aktuell nicht in einem Anbotsdatensatz (Z) angeführt ist.

10. Verfahren zum Austausch von Daten nach einem der Ansprüche 1 bis 9, **dadurch gekennzeichnet, dass** in der zentralen Verwaltungseinheit (VE) Verifizierungsprozesse durchgeführt werden, welche die von den Endnutzern (U1, U2) übermittelten Dateiobjekte (O_{1...n}) hinsichtlich folgender Merkmale überprüfen:
-) einer Fehlerhaftigkeit jeweiliger Dateiobjekte (O_{1...n}) und/oder
-) der Vollständigkeit jeweiliger Dateiobjekte (O_{1...n}) und/oder
-) der Identität jeweiliger Dateiobjekte (O_{1...n}) mit einem vom übermittelnden Endnutzer (U1, U2) angegebenen Inhalt und/oder
-) die Autorisierung des Endnutzers (U1, U2) zur Bereitstellung der jeweiligen Dateiobjekte (O_{1...n}),
wobei im Falle einer negativen Verifizierung eines der angeführten Merkmale eine den jeweiligen Mangel kommunizierende Meldung an eine Informationseinrichtung (IE) und/oder an einen Endnutzer (U1,U2) ergeht, und wobei optional eine Verweigerung der Archivierung jeweiliger Dateiobjekte (O_{1...n}) auf dem Speichermedium (M) erfolgt.
